# EUROPEAN PATENT APPLICATION

(11) **EP 1 835 326 A2**
(43) Date of publication of application: **19.09.2007**
(21) Application number: 07103553.9
(22) Date of filing: 06.03.2007
(51) Int. Cl.: G02C 1/04

(54) **Frame for eyeglasses**

(30) Priority: 14.03.2006 IT PD20060084
(71) Applicant: FOVS S.R.L., I-32040 Lozzo di Cadore (IT)
(72) Inventor: Da Pra, Silvio, 32040, VIGO DI CADORE BL (IT)
(74) Representative: Modiano, Micaela Nadia

(57) **Abstract**

A frame for eyeglasses, comprising a front (11) and two longitudinally elongated flexible elements (12), each of which is adapted to surround a corresponding lens (15) in order to lock it to the front (11); each flexible element (12) is rigidly coupled to the front (11) at a first end (13) by way of first fixing means and at the second opposite end (14) by way of second fixing means. At least one of the first and second fixing means for the two ends (13, 14) of the longitudinally elongated flexible element (12) is formed by a terminal engagement portion (16) which passes through the front (11) from the bottom upward, passing through an opening (27, 127, 227) which is provided internally with extraction-prevention means for the terminal engagement portion (16); the terminal engagement portion protrudes upward from the opening (27, 127, 227) of the front (11) so as to allow a pulling operation for fixing the corresponding end to the front (11).

## Description

The present invention relates to a frame for eyeglasses.

Frames for eyeglasses are currently known which comprise a front and two longitudinally elongated flexible elements, each of which is adapted to surround a corresponding lens in order to lock it to the front.

Each of the flexible elements is rigidly coupled to the front, at a first end, by means of a generally cylindrical insert which protrudes from a narrower portion of said first end and is adapted to be inserted by interlocking in a complementary shaped seat which is formed on the inner part of the front and is open thereon in order to allow the passage of the insert and of the contiguous narrower portion; the seat is extended downward so as to allow the extraction-preventing recessed mounting of the insert.

The second opposite end of each longitudinally elongated flexible element tapers until it is wire-like and is inserted generally from the bottom upward in a first hole on the front and is then turned around a bridge between the first hole and a second laterally adjacent hole, in which said second end is inserted, in order to remain clamped between the lens and the front.

The use of these flexible longitudinal elements allows to obtain frames which can be likened, in terms of visual impact, to those known as "nylor" frames, in which the lenses are fixed to the front by means of a transparent nylon filament which surrounds the lens and is inserted in a groove which is machined on the perimetric edge of the lens.

Such frame allows to provide particular eyeglasses which are apparently monolithic, are lightweight and comfortable to wear, and are capable of freeing a larger viewing field for the user with respect to frames with solid rims for the lenses.

Said frames with flexible longitudinal elements, which are cheaper and faster to prepare with their lenses with respect to nylon-filament "nylor" models, in any case have one end, the second one described above, which is awkward to fix.

Further, for such known frames the flexible element must be made to size for the lens to be fixed and it is necessary to first couple the second end, which must be locked between the lens and the front, and then the first end, which can be put under traction, by virtue of the elastic characteristics of the flexible element, for the insertion of the insert in its seat on the front.

The aim of the present invention is to provide a frame for eyeglasses to which it is easier and faster to fix the lenses with respect to similar frames with longitudinally elongated flexible elements of the known type.

Within this aim, an object of the present invention is to provide a frame for eyeglasses which can be provided with lenses having any curvature and thickness according to requirements.

Another object of the present invention is to provide a frame for eyeglasses which can be adapted to lenses having different shapes.

Another object of the present invention is to provide a frame to which the lenses can be fixed easily.

Another object of the present invention is to provide a frame which can be obtained by molding plastic material.

Another object of the present invention is to provide a frame for eyeglasses which can be manufactured cheaply with known systems and technologies.

This aim and these and other objects, which will become better apparent hereinafter, are achieved by a frame for eyeglasses, of the type which comprises a front and two longitudinally elongated flexible elements, each of which is adapted to surround a corresponding lens in order to lock it to the front, said flexible element being rigidly coupled to the front at a first end by way of first fixing means and at the second opposite end by way of second fixing means, said frame being characterized in that at least one of said first and second fixing means for the two ends of the longitudinally elongated flexible element is formed by a terminal engagement portion which passes through said front from the bottom upward, passing through an opening which is provided internally with extraction-prevention means for said terminal engagement portion, said portion protruding upward from said opening of the front with its excess part and thus allowing pulling for fixing the corresponding end to the front.

Further characteristics and advantages of the invention will become better apparent from the following detailed description of three preferred but not exclusive embodiments thereof, illustrated by way of non-limiting example in the accompanying drawings, wherein:
Figure 1 is a perspective view of a portion of a frame according to the invention;
Figure 2 is an exploded front view of the portion of the frame according to the invention of Figure 1;

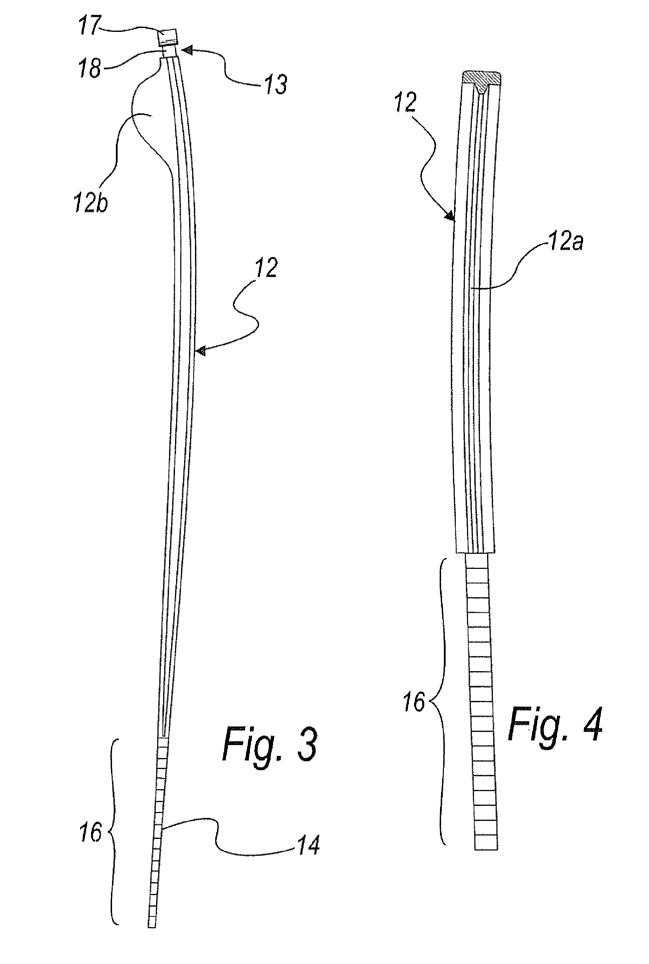

Figure 3 is a side view of a flexible longitudinally elongated element of a frame according to the invention;
Figure 4 is a sectional view of a portion of the element of Figure 3;
Figure 5 is a sectional view of a detail of a frame according to the invention in a first embodiment thereof;
Figure 6 is a sectional view of a detail of a frame according to the invention in a second embodiment thereof;
Figure 7 is a sectional view of a detail of a frame according to the invention in a third embodiment thereof;
Figures 8 and 9 are views of a tool for assembling a frame according to the invention.

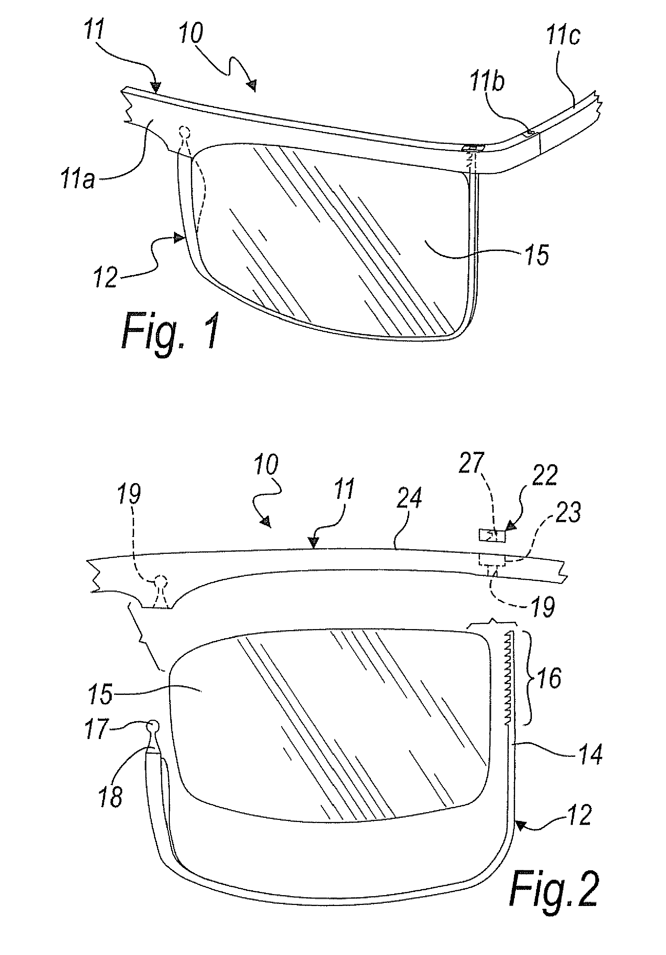

With reference to the figures, a frame for eyeglasses according to the invention is generally designated by the reference numeral 10 in its first embodiment, which is shown in Figures 1 and 2.

The frame 10 comprises a front 11 and two longitudinally elongated flexible elements 12, only one of which is shown by way of example in the figures, each element being adapted to surround a corresponding lens 15 in order to lock it to the front 11.

Each flexible element 12 is rigidly coupled to the front 11 at a first end 13 by way of first fixing means and, at the second opposite end 14, by way of second fixing means, both of which are described in greater detail hereinafter.

At least one of said first and second fixing means for the two ends 13 and 14 of the longitudinally elongated flexible element 12 is constituted by a terminal engagement portion 16, which is adapted to pass through the front 11 from the bottom upward, passing through an opening 27 which is provided internally with extraction preventing means for the terminal engagement portion 16; said terminal engagement portion protrudes with its excess part from the opening 27 provided in the front 11 and thus allows pulling for fixing the corresponding end to the front 11.

The terminal engagement portion 16, for its part which protrudes upward from the front 11, at the end of the operation for fixing by pulling, is removed.

In the first embodiment, described here by way of non-limiting example of the invention, the first fixing means are provided by a substantially cylindrical insert 17, which protrudes continuously from a portion 18 having a narrower cross-section of the first end 13 of the longitudinally elongated element 12, the axis of the cylindrical insert 17 being perpendicular to the longitudinal line of the flexible element 12.

The insert 17 is adapted to be inserted by interlocking in a complementary shaped seat 19, which is formed on the front 11 and opens thereon on the inner side, in order to allow the passage of the insert 17 and of the contiguous portion 18 having a narrower cross-section.

The seat 19 is extended downward so as to allow the extraction-preventing recessed fitting of the insert 17.

In said first embodiment of the invention, the second fixing means for the second end 14 of each longitudinally elongated flexible element 12 are constituted by the terminal engagement portion 16 of the second end 14, which is made to pass through the front 11 from the bottom upward, passing through the opening 27 provided internally with extraction-preventing means for the terminal engagement portion 16, which protrudes upward from the front 11 and allows pulling for fixing the corresponding end to the front 11.

The terminal engagement portion 16 has, transversely to the direction of its longitudinal extension, a series of elastically deformable teeth, designated by way of example by the reference numerals, 20, 20a and 20b.

The opening 27 is formed in a female element 22, which is accommodated so as to be hidden from view in a corresponding seat 23, which is open on an upper part 24 of the front 11, at a through hole 19 which is open below the front 11.

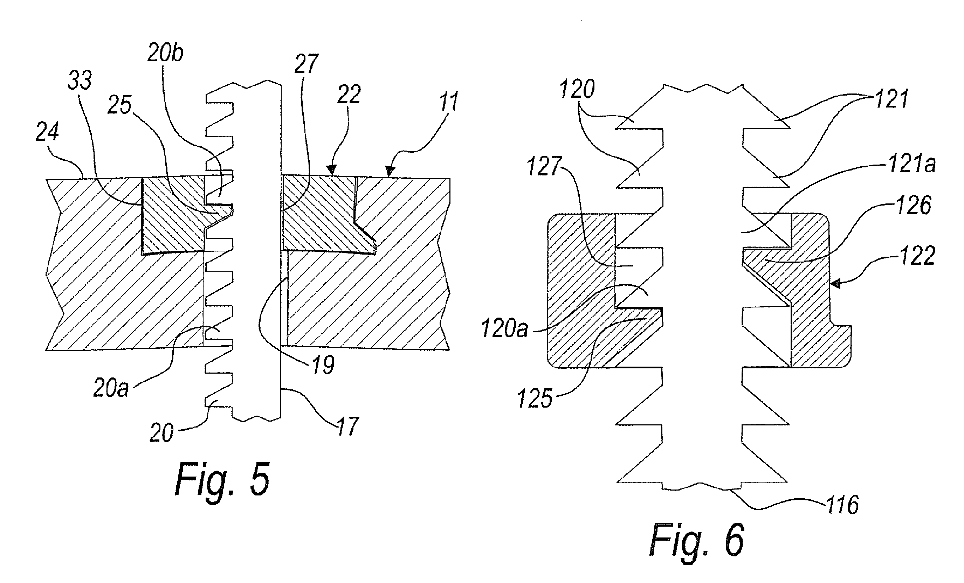

In said first embodiment of the invention, the extraction prevention means within the female element 22 are provided by an abutment protrusion 25, which is formed within the through opening 27 in the female element 22; as shown in Figure 5, a tooth, for example 20b, of the terminal engagement portion 16 is adapted to engage on said protrusion.

In particular, in said first embodiment, the terminal engagement portion 16 is of the toothed strap type and the teeth 20, 20a and 20b are substantially triangular and sawtooth-shaped.

The flexible elements 12 of the frame 10 according to the invention therefore allow to fix the lenses 15 to the front 11 more simply and quickly than similar frames with flexible longitudinal elements of the known type, since it is sufficient to work by first inserting the first end 13 in its receptacle 19 and then inserting the terminal engagement portion 16 in the hole 19 through the female element 22.

The terminal engagement portion 16 is then pulled so as to adapt in an optimum manner the element 12 to the lens 15, which in the meantime has been positioned between the element 12 and the front 11.

Although the profile of the lens 15 and of the element 12 do not coincide, by pulling the terminal engagement portion 16 the element 12 can in fact be made to tighten around the lens 15, adapting to its shape.

For the same reason, and differently from similar known types of frame, the longitudinally elongated flexible elements 12 can be adapted to lenses 15 having different dimensions, shapes and thicknesses, since the fixing action is optimized by pulling the terminal engagement portion 16 and by consequently adapting the flexible element 12 to the profile of the lens 15.

In order to facilitate correct arrangement between the flexible element 12 and the lens 15, the flexible element 12 has, along its entire length comprised between the first end 13 and the beginning of the terminal engagement portion 16, a ridge 12a, which is adapted to enter a corresponding slot, not shown for the sake of simplicity, which is provided on the rim of the lens 15, as occurs for lenses of frames of the "nylor" type described above.

As an alternative to the ridge 12a for retaining the lens, the flexible element 12 can have a concave cross-section which is shaped complementarily to the rim of the lens, in order to contain it.

Assembly of the eyeglasses ends by removing, by cutting or cropping, the excess part of the terminal engagement portion 16 which, at the end of the pulling operation, protrudes from the front 11.

In the frame 10 according to the invention, the first end 13 is preferably rigidly coupled centrally to the front 11, at the nose piece, if provided, or at the central bridge 11 a, while the second end 14 is rigidly coupled to a lateral part of the front 11, proximate to the articulation 11b, if provided, for connection to the temples 11c or in any case proximate to the region for connection to said temples.

The longitudinally elongated flexible element 12 is provided with a lug 12b in the embodiment of the invention described here.

In a second embodiment of the invention, the terminal engagement portion 116 has two mutually opposite series of teeth 120 and 121, as shown in Figure 6.

The female element 122 has two abutment protrusions 125 and 126, which are offset on two opposite sides of the through opening 127 and are each adapted to engage a tooth 120a and 121a of one of the two mutually opposite series of teeth 120 and 121.

The present invention also relates to a tool 40 for pulling the terminal engagement portion 16 of a longitudinally elongated element 12 of a frame for eyeglasses 10 according to the same invention.

The tool 40 is constituted by a handle 30, from which a substantially longitudinal plate-like portion 31 protrudes, an eye 32 for the passage for the terminal engagement portion 16 or 116 being present at its ends.

The dimensions of the eye 32 are such as to prevent the extraction of the part of the terminal engagement portion 16 or 116 which already crosses it.

The tool 40 is used as follows.

The terminal engagement portion 16 or 116 of the second end 14 is passed through the eye 32, and then the fitter of the lens 15 turns the tool by acting on the handle 30, and by resting the head 33 thereon on a support, which can be the front 11 or the edge of the female element 22, uses said support as a lever fulcrum in order to apply traction.

The tool 40 is therefore very useful in facilitating the pulling of the terminal engagement portion 16, allowing to fix the longitudinally elongated element 12 to the front 11, imparting the optimum traction force to the clamping of the lens 15 between the front 11 and the element 12.

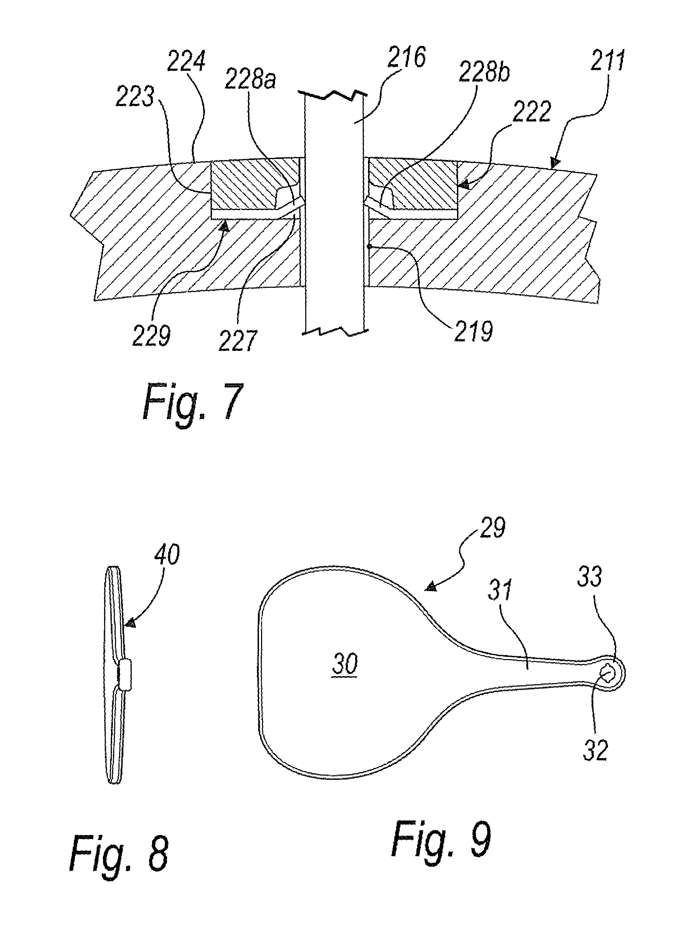

In a third embodiment of the invention, shown by way of example in Figure 7, the terminal engagement portion 216 is completely smooth and is passed from the bottom upward through the opening 227 formed in the front 211; the extraction-prevention means within the opening 227 are provided by at least one locking protrusion, which is adapted to slide on the terminal engagement portion 216 during pulling during the insertion of said portion and to lock thereon when it is released at the end of said pulling.

In the particular embodiment described here by way of non-limiting example of the invention, the extraction-prevention means are constituted by a metallic plate 229, on which there is a slot with two locking protrusions 228a and 228b, which are formed by two mutually opposite teeth which are adapted to flex in order to slide, at an angle, during the insertion of the terminal engagement portion 216 through the slot.

The plate 229 is fixed within a corresponding seat 223 which is open on the upper part 224 of the front 211, at a through hole 219 for access from the bottom upward of the terminal engagement portion 216 in the slot.

In particular, the metallic plate 229 is part of a female element 222 which is accommodated so as to be concealed within the corresponding seat 223 which is open on the upper part 224 of the front 211, at the through hole 219 which is open below the front 211.

In this third embodiment of the invention, extraction-preventing locking is performed simply by inserting the terminal engagement portion 216 in the slot of the plate 229 and pulling it until the flexible element has adapted in an optimum manner to the profile of the lens.

In another embodiment of the invention, not shown for the sake of simplicity, the first fixing means for the first end 13 of each longitudinally elongated flexible element 12 are constituted by a terminal engagement portion of the first end 13, which passes through the front 11 from the bottom upward, passing through an additional opening which is provided internally with extraction-preventing means for the terminal engagement portion 16, which protrudes after insertion, from said opening on the front 11 and allows a pulling operation for fixing the corresponding end to the front 11.

In a manner similar to what has been described for the second fixing means, for this embodiment of the first fixing means also, the terminal engagement portion can be of the toothed or smooth strap type and correspondingly the female elements can have one or two abutment protrusions for the teeth of the terminal engagement portion or a metallic plate with locking teeth.

In practice it has been found that the invention thus described solves the problems described in known types of frames for eyeglasses.

In particular, the present invention provides a frame for eyeglasses to which lenses can be fixed easily, regardless of their shape, thickness and size, and by using a same type of longitudinally elongated flexible element, which therefore is substantially standardized for a wide range of lenses to be fixed.

Further, the present invention provides a frame for eyeglasses to which the lenses can be fixed more easily and more quickly than similar frames with longitudinally elongated flexible elements of the known type.

Moreover, the present invention provides a frame to which the lenses can be fixed easily.

Further, the frame 10, being composed of a front 11 and two longitudinally elongated elements 12, can be composed with color combinations which are chosen according to the liking of the buyer, since the front 11 and the elements 12 can be chosen of the same color, of a different color, clear or opaque.

It is equally simple and cheap for an owner of a frame 10 according to the invention to replace the elements 12 by removing them from the front 11, and replace them with other identical or different ones.

Another object of the present invention is to provide a frame for eyeglasses which can be manufactured cheaply with known systems and technologies.

In practice, the materials employed, so long as they are compatible with the specific use, as well as the dimensions, may be any according to requirements and to the state of the art.

The disclosures in Italian Patent Application No. PD2006A000084 from which this application claims priority are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A frame for eyeglasses, of the type which comprises a front (11) and two longitudinally elongated flexible elements (12), each of which is adapted to surround a corresponding lens (15) in order to lock it to the front (11), said flexible element (12) being rigidly coupled to the front (11) at a first end (13) by way of first fixing means and at the second opposite end (14) by way of second fixing means, said frame being **characterized in that** at least one of said first and second fixing means for the two ends (13, 14) of the longitudinally elongated flexible element (12) is formed by a terminal engagement portion (16) which passes through said front (11) from the bottom upward by way of an opening (27, 127, 227) which is provided internally with extraction-prevention means for said terminal engagement portion (16), said portion protruding, after insertion, from said opening (27, 127, 227) provided on the front (11), allowing pulling for fixing the corresponding end to the front (11).

2. The frame according to claim 1, **characterized in that** the excess portion of said terminal engagement portion (16), which protrudes upward from said front (11) at the end of the operation for fixing by pulling, is removed.

3. The frame according to one or more of the preceding claims, **characterized in that** said first fixing means are constituted by a substantially cylindrical insert (17), which protrudes continuously from a portion having a narrower cross-section (18) of said first end (13) of the longitudinal elongated element (12), the axis of symmetry of said cylindrical insert (17) being transverse with respect to the longitudinal line of the flexible element (12), said insert (17) being adapted to be inserted by interlocking in a complementarily shaped seat (19) which is formed on the inner part of the front (11) so as to allow the passage of said insert (17) and of the contiguous portion (18) having a narrower cross-section, said seat (19) protruding downward so as to allow extraction-preventing recessed fitting of said insert (17).

4. The frame according to one or more of the preceding claims, **characterized in that** said second fixing means for the second end (14) of each longitudinally elongated flexible element (12) are constituted by said terminal engagement portion (16) of the second end (14), which is made to pass through said front (11) from the bottom upward, passing through said opening (27) which is provided internally with extraction-preventing means for said terminal engagement portion (16), said portion protruding upward from said opening (27) on the front (11), allowing a pulling operation for fixing the corresponding end to the front (11).

5. The frame according to claim 4, **characterized in that** said terminal engagement portion (16, 116) is provided, transversely to the direction of its longitudinal extension, with a series of elastically deformable teeth (20, 20a, 20b, 120, 120a, 121, 121a), said terminal engagement portion (16, 116) being made to pass from the bottom upward through the corresponding opening (27, 127) on said front (11).

6. The frame according to claim 5, **characterized in that** said opening (27, 127) is provided on a female element (22, 122), which is accommodated so as to be hidden from view in a corresponding seat (23) which is open on the upper part (24) of said front (11), at a through hole (19) which is open below said front (11).

7. The frame according to claim 6, **characterized in that** said extraction-prevention means within said female element (22, 122) are provided by at least one abutment protrusion (25, 125, 126), which is formed within said through opening (27, 127) on said female element (22, 122), on which at least one said tooth (20, 20a, 20b, 120, 120a, 121, 121 a) of the terminal engagement portion (16, 116) is adapted to engage.

8. The frame according to claim 7, **characterized in that** said terminal engagement portion (16) is of the toothed strap type and said teeth (20, 20a, 20b) are substantially triangular and sawtooth-shaped.

9. The frame according to one or more of the preceding claims, **characterized in that** said female element (22) has an abutment protrusion (25) for a tooth (20b) of said toothed-strap terminal engagement portion (16).

10. The frame according to one or more of the preceding claims, **characterized in that** said terminal engagement portion (116) has two mutually opposite series of teeth (120, 121).

11. The frame according to one or more of claims 1 to 7 and 10, **characterized in that** said female element (122) has two abutment protrusions (125, 126), which are mutually offset on two opposite sides of the through opening (127), each being adapted for engagement with a tooth (120a, 121a) of one of the two mutually opposite series of teeth (120, 121).

12. The frame according to one or more of the preceding claims, **characterized in that** said first end (13) is centrally coupled to said front (11), while said second end (14) is rigidly coupled to a lateral part of the front (11).

13. The frame according to one or more of the preceding claims, **characterized in that** the flexible element (12) has, along its entire length comprised between the first end (13) and the beginning of the terminal engagement portion (16), a ridge (12a) which is adapted to enter a corresponding groove provided on the outer rim of the lens (15).

14. The frame according to one or more of the preceding claims, **characterized in that** the flexible element (12) has a concave cross-section which is adapted to contain the outer rim of the lens (15).

15. The frame according to one or more of the preceding claims, **characterized in that** said longitudinally elongated flexible element (12) has a lug (12b) which is monolithic therewith.

16. The frame according to one or more of claims 1 to 4 and 12 to 14, **characterized in that** said terminal engagement portion (216) is completely smooth and is inserted from the bottom upward in the corresponding opening (227) on said front (211), said extraction-preventing means within said opening (227) comprising at least one locking protrusion (228a, 228b), which is adapted to slide on the terminal engagement portion (216) during the pulling operation for its insertion and to lock thereon when it is released at the end of said pulling operation.

17. The frame according to claim 16, **characterized in that** said extraction-prevention means are constituted by a metallic plate (229), which is provided with a slot with at least two locking protrusions (228a, 228b) which are formed by two mutually opposite teeth which are adapted to flex in order to slide, at an angle, in the direction for the insertion of said terminal engagement portion (216) through the slot of said plate (229), said plate (229) being fixed inside a corresponding seat (223) which is open on the upper part (224) of said front (211), at a through hole (219) for access from the bottom upward of the terminal engagement portion (216) in the slot.

18. The frame according to claim 17, **characterized in that** said metallic plate (229) is a part of a female element (222) which is accommodated so as to be hidden from view in the corresponding seat (223) provided on the upper part (224) of said front (211), at said through hole (219) which is open below said front (211).

19. The frame according to one or more of the preceding claims, **characterized in that** said longitudinally elongated flexible elements (12) are obtained by molding plastic material.

20. The frame according to one or more of claims 1 and 2 and 4 to 18, **characterized in that** said first fixing means for the first end (13) of each longitudinally elongated flexible element (12) are formed by a terminal portion for the engagement of the first end (13), which is inserted so as to pass through said front (11) from the bottom upward, passing through an additional opening which is provided internally with extraction-prevention means for said terminal engagement portion (16), said portion, once insertion has occurred, protruding upward from said opening on the front (11) and allowing a pulling operation to fix the corresponding end to the front (11).

21. A tool for pulling particularly the terminal engagement portion of a longitudinally elongated element of a frame for eyeglasses according to one or more of the preceding claims, **characterized in that** it is constituted by a handle (30), from which a substantially longitudinally elongated plate-like portion (31) extends, an eye (32) being provided at its end for the passage of said terminal engagement portion (16, 116, 216), the dimensions of the eye (32) being such as to prevent extraction of the part of said terminal engagement portion (16, 116, 216) by which it is already crossed.
